Europäisches Patentamt

European Patent Office

Office européen des brevets

(19)

(11) Publication number: **0 305 617 B1**

# EUROPEAN PATENT SPECIFICATION

(45) Date of publication of patent specification: **11.11.92**　(51) Int. Cl.⁵: **B60C 11/00**, B29D 30/06

(21) Application number: **87307815.8**

(22) Date of filing: **04.09.87**

(54) **Tyre vulcanizing mould.**

(43) Date of publication of application:
**08.03.89 Bulletin 89/10**

(45) Publication of the grant of the patent:
**11.11.92 Bulletin 92/46**

(84) Designated Contracting States:
**DE FR GB**

(56) References cited:
**EP-A- 0 016 229**
**DE-A- 2 341 716**
**FR-A- 2 279 574**
**FR-A- 2 312 385**
**US-A- 4 258 691**

**E.C. WOODS: "Pneumatic tyre design", 1955,
pages 30-39, Heffer & Sons for the Institution
of the Rubber Industry, London, GB**

(73) Proprietor: **SUMITOMO RUBBER INDUSTRIES
LIMITED
No. 1-1, Tsutsui-cho 1-chome
Fukiai-ku Kobe-shi Hyogo(JP)**

(72) Inventor: **Iuchi, Munenori
1 Minatojima Nakamachi 3-chome Chuo-ku
Kobe-shi Hyogo-ken(JP)**

(74) Representative: **Stewart, Charles Geoffrey
SP TYRES UK LIMITED Tyre Technical Division
Fort Dunlop Birmingham B24 9OT(GB)**

EP 0 305 617 B1

## Description

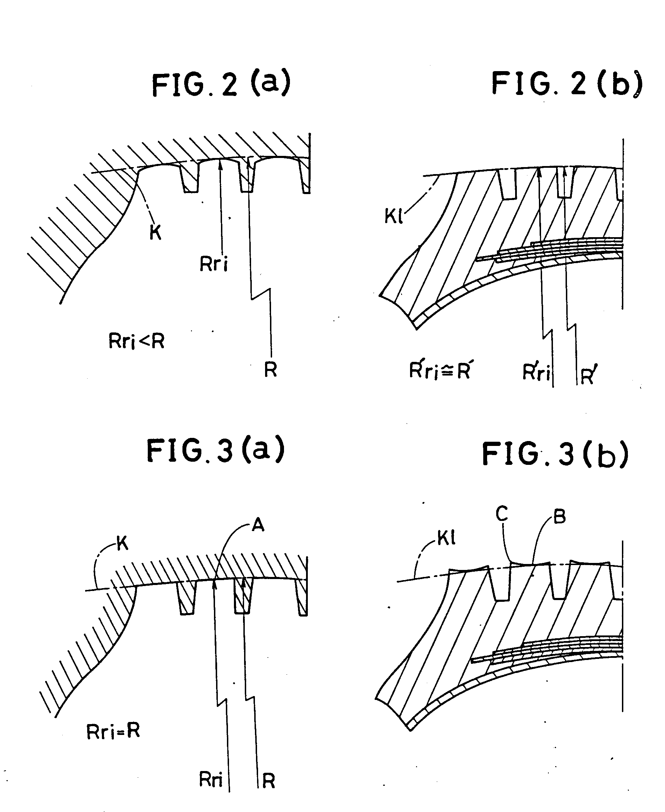

This invention relates to a tyre vulcanizing mould for producing rib pattern tyres such as a truck or bus tyre with a steel belt reinforcement, and is intended to reduce uneven wear. A mould according to the preamble of claim 1 is shown in Fig.3(a).

Recently, for trucks and buses, radial tyres with a strong tread reinforcement, especially with a steel cord belt layer have been widely used because of their good resistance to wear and punctures. For such tyres especially for well kept roads, rib-type tread patterns are applied to minimize internal temperature generation.

However, in such tyre patterns, uneven wear is apt to occur along the edges of the ribs. To reduce this uneven wear, there have been made various propositions, a recent one being to decrease the angles of the sides of the ribs with respect to the normal direction of the tread profile and with respect to the circumferential direction of the tyre.

In conventional tyre-vulcanizing moulds for such tyres having small angles of the sides of the ribs as described above, the rib forming faces A have, as shown in Fig. 3(a), a curvature of the same radius as that of the virtual curve K corresponding to the tread profile. As a result, the tread of the demoulded tyre has the same single radius as that of the mould when the tyre is inflated to its specified pressure, but the tread does not show the single radius of curvature, but shows the shape shown exaggeratedly in Fig. 3(b), that is, as the tyre is inflated, the outer surface of the ribs B, becomes curved by the generation of tensile strains at the edges C of the ribs and the edges C protrude radially outwardly over the expected tread profile K1.

Consequently, wear at the edges C of the ribs is accelerated and the tread wears unevenly.

FR-A-2 312 385 describes a tyre having rib surfaces, which have a radius of curvature R smaller than the radius of the virtual curve of the tread surface.

It is an object of the present invention to provide a tyre-vulcanizing mould which lessens the uneven wear of rib pattern tyres by creating the correct curvature of the rib surface when the tyre is inflated after demoulding. This object is achieved by the features of claim 1.

According to the invention a tyre vulcanizing mould is provided for a tyre comprising a tread having a curved tread profile of a 450 to 700 mm radius, a pattern of circumferentially extending zig-zag ribs and a steel ply reinforced breaker, comprising a tread forming cavity including circumferentially extending zig-zag grooves having groove sidewalls at an angle less than 20 degrees to the normal to the virtual curve, which is the overall tread surface curvature, and the zig-zag angles are less than 20 degrees to the circumferential direction characterised by the grooves having rib surface making faces which have a radius of curvature which is in the range of 50 to 80% of the radius of the virtual curve. Thereby the radius R varies across the tyre such that the radius Rr for the outer ribs is larger than the radius Rr of the inner ribs.

Furthermore the ribs are preferably all of similar width.

An embodiment of the present invention will now be described, by way of example only, in conjunction with the attached diagrammatic drawings in which:-

Fig. 1(a) is a cross sectional view of a mould according to one embodiment of the present invention.

Fig. 2(a) is a partial plan view of the mould of fig. 1.

Fig. 2(b) is a partial sectional view of a tread of a tyre formed by the above mould inflated to the maximum pressure.

Fig. 3(a) is a partial sectional view of a conventional mould.

Fig. 3(b) is a partial sectional view of a tread of a tyre formed by the above conventional mould of fig 3, showing exaggeratedly the deformation of the rib when the tyre is inflated to the maximum pressure, and

Fig. 4 is a sectional view showing uneven wear at the tread rib edges.

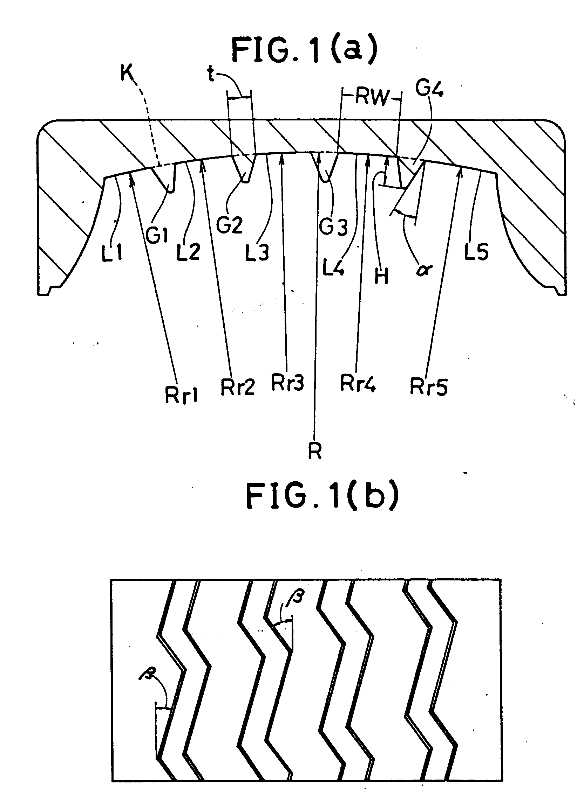

The mould 1 of Figs. 1(a) and 1(b) is for a truck tyre having five zigzag continuous ribs. The mould has circumferentially extending grooves L1, L2, L3, L4 and L5, to form five circumferentially extending ribs in the tyre tread, formed by four ridges G1 to G4. In this case the ribs are of the same width.

The sidewalls of the grooves have an angle $\alpha$ to the normal direction of the virtual curve K, which is the overall tread cross sectional curvature, of not more than 20 degrees and an angle $\beta$ to the circumferential direction of the tyre not more than 20 degrees (see fig 1(b)).

Each groove is provided at its base with a rib surface making form to form the radially outer surface of its respective rib in the finished tyre. Each rib surface has, as shown in fig 2 (a) a radius $Rri$ ($i = 1,2,3...$) in the range of 50 to 80% of the radius R of the virtual curve K.

The width RW of the grooves and the width of the ridges $Gi$ ($i = 1,2,3...$) are in the ranges of 15 to 30 mm and 10 to 15 mm, respectively.

The virtual curve K corresponding to the tread profile, has a radius R in the range of 450 to 750 mm.

Thus, the mould of the invention produces a tyre having an overall cross sectional tread radius of curvature R but the outer surface of each rib has a smaller radius of curvature Rri.

The smaller radius of curvature is chosen according to the angles $\alpha$ and $\beta$ and the changes on inflation of the tyre to its service pressure.

For example, in the case where $\alpha$ = 0 degrees and $\beta$ = 0 degrees when the tyre is inflated and the tensile strain on the ribs becomes largest. The ribs are most liable to deform. Hence, even in that condition, by setting the radius Rri to be about 50% of the radius R, the radius $R'$ri of each rib becomes nearly equal to the radius $R'$ of the tread surface on inflation.

In the case $\alpha$ = 20 degrees and $\beta$ = 20 degrees, that is, in a condition that the ribs are most hard to deform, when the tyre is inflated the radius $R'$ri becomes nearly equal to the radius $R'$ by setting the radius Rri to be about 80% of the radius R.

If Rri/R is set larger than 0.8, the radius $R'$ri becomes larger than the radius $R'$ ($R'$ri > $R'$) and the tensile strength at both ends of each rib becomes larger. As a result, uneven wear is once more unfavourably promoted.

If Rri/R is set smaller than 0.5, the radius $R'$ri becomes undesirably smaller than the radius $R'$.

It is particularly when both angles $\alpha$ and $\beta$ are smaller than 20 degrees, the effect of the present invention becomes most notable.

The radii Rri vary across the tyre such that Rr1 > Rr2 > Rr3 < Rr4 < Rr5 so that the radius is smaller for the inner ribs.

The above-mentioned facts were proved to show the value of the invention by experiments, and the values of Rr/R we then fixed, taking many conditions, such as the angles and of the sides of the ribs, the radius R of the mould, the depth of the tread groove, that is, the height H of the ridges G and the sectional shape,into consideration.

To prove the advantages of the invention, test tyres 1, 2, 3 and 4 were manufactured using moulds of identical construction except for the radii (Rr). The tyre size was 10.00R 20. The width RW of the grooves was 22 mm, and the width t and the height H of the ridges G was 12 mm and 15 mm, respectively.

The tyres 1 and 2 were manufactured using moulds according to the present invention. Tyre 3 was manufactured by using a mold of Rr/R = 1.0. Tyre 4 was manufactured by using a mould of Rr/R = 0.4.

The radii $R'$ and $R'$r when the tyres were inflated to the maximum pressure specified by JIS (Japanese Industrial Standard), were measured.

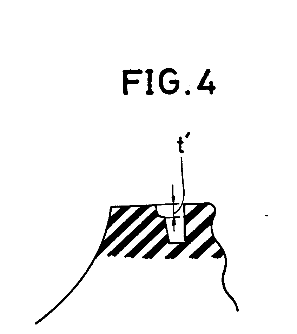

Furthermore, the amount $t'$ of uneven wear which appears as shown in (Fig.4) after a 50,000 km run, was measured.

The results of the measurements are shown in Table 1, wherein the amount of uneven wear is indicated by an index based on the assumption that the quantity of uneven wear of tyre 1 was 100.

TABLE 1

| | | | Invention | |
| | | | Tyre 1 | Tyre 2 |
| Mould: | | | | |
| Angle | | | 20 | 0 |
| Angle | | | 20 | 0 |
| Radius | R | mm | 460 | 460 |
| Radius | Rr | mm | 368 | 230 |
| Ratio | Rr/R | | 0.8 | 0.5 |
| Tyre (inflated):70 | | | | |
| Radius | R' | mm | 450 | 450 |
| Radius | R'r | mm | 450 | 450 |
| Ratio | R'r/R' | | 1.0 | 1.0 |
| Uneven wear* | t' | | 100 | 100 |

*: the larger the value, the larger the wear

| | | | Control | |
| | | | Tyre 3 | Tyre 4 |
| Mould: | | | | |
| Angle | | | 20 | 0 |
| Angle | | | 20 | 0 |
| Radius | R | mm | 460 | 460 |
| Radius | Rr | mm | 460 | 184 |
| Ratio | Rr/R | | 1.0 | 0.4 |
| Tyre (inflated):70 | | | | |
| Radius | R' | mm | 450 | 450 |
| Radius | R'r | mm | 505 | 350 |
| Ratio | R'r/R' | | 1.12 | 0.78 |
| Uneven wear* | t' | | | 132 |

*: the larger the value, the larger the wear

As mentioned, the tyre vulcanizing mould according to the invention is for tyres in which the tread is provided with ribs and the angles of the sides of the ribs to the normal direction of the tread profile and to the circumferential direction of the tyre are small, and the radius of curvature of the rib surface making faces is smaller than the radius of curvature of the virtual curve. Accordingly, when the tyre is inflated, a tread surface of nearly one single curvature is obtained and uneven wear is effectively reduced.

**Claims**

1. A tyre vulcanising mould for a tyre having a curved tread profile of 450 to 700mm radius, a pattern of circumferentially extending zig-zag ribs and a steel ply reinforced breaker, the mould comprising a tread forming cavity including circumferentially extending zig-zag grooves (L1 to L5) having groove sidewalls at an angle $\alpha$ < 20 degrees to the normal to the virtual curve K, which is the overall tread surface cross sectional curvature, and extending circumferentially at angles $\beta$ < 20 degrees to the circumferential direction of the mould characterised by the grooves (L1 to L5) having rib surface making faces which have a radius of curvature Rr which is within the range of 50 to 80% of the radius R of the virtual curve K and the radii Rri of the rib surface making faces being larger for the axially outer

4

grooves than the axially inner grooves such that Rr1 > Rr2 > Rr3 < Rr4 < Rr5.

2. A tyre mould according to Claim 1 characterised by the radius Rr being in the range of 50 to 60% of the radius R and the angles α and β being in the range of 0 to 5 degrees.

3. A tyre mould according to either of Claims 1 or 2 characterised by the radius Rr being in the range of 70 to 80% of the radius R and the angles α and β being in the range of 15 to 20 degrees.

4. A radial tyre having a steel reinforced breaker and a tread pattern comprising circumferentially extending zig-zag ribs moulded in a mould according to any one of Claims 1 to 3 such that the tread ribs have groove sidewalls at an angle α < 20 degrees to the normal to the virtual curve K and angles β < 20 to the circumferential direction characterised by the ground contacting rib surfaces having a radius of curvature Rr which is in the range of 50 to 80% of the radius Rr of the virtual curve K of the general tread cross sectional radius.

**Patentansprüche**

1. Reifenvulkanisierungsform für einen Luftreifen mit einem gekrümmten Laufflächenprofil von 450 bis 700 mm Radius, einem Muster von sich umfangsmäßig erstreckenden Zick-Zack-Rippen und einer stahllagenverstärkten Gürtellage, wobei die Form gebildet wird von einem die Lauffläche bildenden Hohlraum, welcher sich umfangsmäßig erstreckende Zick-Zack-Nuten (L1 bis L5) aufweist, die Nutenseitenwände unter einem Winkel α < 20° zur Normalen auf die virtuelle Kurve K haben, welche die Querschnittskrümmung der Gesamt-Laufflächenoberfläche bildet, und sich umfangsmäßig unter Winkeln β < 20° zur Umfangsrichtung der Form erstrecken,
   **gekennzeichnet** durch die Nuten (L1 bis L5) mit eine Rippenoberfläche ausbildenden Flächen, welche einen Krümmungsradius Rr aufweisen, welcher innerhalb eines Bereiches von 50 bis 80 % des Radiuses R der virtuellen Kurve K ist, und wobei die Radien Rri der die Rippenoberfläche bildenden Flächen für die axial äußeren Nuten größer als sind als für die axial inneren Nuten, so daß Rr1 > Rr2 > Rr3 < Rr4 < Rr5.

2. Eine Reifenform nach Anspruch 1,
   **gekennzeichnet** durch den Radius Rr, welcher im Bereich von 50 bis 60 % des Radiuses R liegt, und die Winkel α und β, die im Bereich von 0 bis 5 Grad liegen.

3. Reifenform nach Anspruch 1 oder 2,
   **gekennzeichnet** durch den Radius Rr, welcher im Bereich von 70 bis 80 % des Radiuses R liegt, und die Winkel α und β, welche im Bereich von 15 bis 20 Grad sind.

4. Radialreifen mit einer stahlverstärkten Gürtellage und einem Laufflächenmuster, umfassend sich umfangsmäßig erstreckende Zick-Zack-Rippen, welche in einer Form gemäß einem der Ansprüche 1 bis 3 geformt sind, so daß die Laufflächenrippen Nutenseitenwände unter einem Winkel α < 20° zur Normalen auf die virtuellen Krümmung K und Winkel β < 20° zur Umfangsrichtung aufweisen,
   **gekennzeichnet** durch die bodenkontaktierenden Rippenoberflächen mit einem Krümmungsradius Rr, der im sich im Bereich von 50 bis 80 % des Radius R der virtuellen Kurve K des Gesamt-Laufflächenquerschnittsradiuses befindet.

**Revendications**

1. Moule de vulcanisation destiné à un pneumatique ayant un profil courbe de bande de roulement de rayon compris entre 450 et 750 mm, une sculpture formée de nervures sinueuses disposées circonférentiellement et une nappe sommet armée d'une nappe d'acier, le moule comprenant une cavité destinée à former une bande de roulement ayant des gorges sinueuses (L1 à L5) disposées circonférentiellement et ayant des parois latérales de gorges faisant un angle α inférieur à 20° avec la normale à la courbe virtuelle K qui est la courbure globale en coupe de la surface de la bande de roulement, et disposées circonférentiellement avec des angles β inférieurs à 20° par rapport à la direction circonférentielle du moule, caractérisé en ce que les gorges (L1 à L5) ont des faces formant des surfaces de bande de roulement dont le rayon de courbure Rr est compris entre 50 et 80 % du rayon R de la courbe virtuelle K, les rayons Rri des faces formant les surfaces des nervures des gorges axialement externes étant supérieurs à ceux des gorges axialement internes, d'une manière telle que :

Rr1 > Rr2 > Rr3 < Rr4 < Rr5

2. Moule pour pneumatique selon la revendication 1, caractérisé en ce que le rayon Rr est compris entre 50 et 60 % du rayon R, et les angles $\alpha$ et $\beta$ sont compris entre 0 et 5°.

3. Moule pour pneumatique selon la revendication 1 ou 2, caractérisé en ce que le rayon Rr est compris entre 70 et 80 % du rayon R et les angles $\alpha$ et $\beta$ sont compris entre 15 et 20°.

4. Pneumatique à carcasse radiale ayant une nappe sommet renforcée d'acier et une sculpture de bande de roulement comprenant des nervures sinueuses disposées circonférentiellement, moulée dans un moule selon l'une quelconque des revendications 1 à 3 de manière que les nervures de la bande de roulement possèdent des parois latérales de gorges faisant un angle $\alpha$ inférieur à 20° avec la normale à la courbe virtuelle K et des angles $\beta$ inférieurs à 20° par rapport à la direction circonférentielle, caractérisé en ce que la surface de contact avec le sol des nervures a un rayon de courbure Rr qui est compris entre 50 et 80 % du rayon Rr de la courbe virtuelle K du rayon général en coupe de la bande de roulement.

## FIG.1(a)

## FIG.1(b)

# FIG. 2 (a)

K

Rri

Rri<R

R

# FIG. 2 (b)

Kl

R'ri≅R'    R'ri    R'

# FIG. 3 (a)

K    A

Rri=R

Rri    R

# FIG. 3 (b)

Kl    C    B

# FIG.4